# EUROPÄISCHE PATENTSCHRIFT

(11) **EP 0 969 052 B1**
(45) Veröffentlichungstag und Bekanntmachung des Hinweises auf die Patenterteilung: **23.07.2003**
(21) Anmeldenummer: 99109597.7
(22) Anmeldetag: 14.05.1999
(51) Int. Cl.: C09C 1/56, C09C 1/54

(54) **Oxidativ nachbehandelter Russ**
Oxidative post-treatment of carbon black
Post-traitement oxydant de noir de fumée

(30) Priorität: 29.05.1998 DE 19824047
(43) Veröffentlichungstag der Anmeldung: 05.01.2000
(73) Patentinhaber: Degussa AG, 40474 Düsseldorf (DE)
(72) Erfinder: Karl, Alfons Dr., 63584 Gründau (DE)

(56) Entgegenhaltungen:
- WO-A-93/18094
- US-A- 3 245 820

## Beschreibung

Die Erfindung betrifft einen oxidativ nachbehandelten Ruß für die Anwendung als Pigment in Lacken, Druckfarben und Tinten zum Beispiel für Tintenstrahldrucker.

In Lacken und Druckfarben wird als Schwarzpigment wegen seiner hervorragenden Eigenschaften überwiegend Ruß eingesetzt. Pigmentruße stehen in großer Auswahl mit unterschiedlichen Eigenschaften zur Verfügung. Zur Herstellung von Pigmentruß werden verschiedene Verfahren eingesetzt. Am häufigsten ist die Herstellung durch oxidative Pyrolyse von kohlenstoffhaltigen Rußrohstoffen. Hierbei werden die Rußrohstoffe bei hohen Temperaturen in Anwesenheit von Sauerstoff unvollständig verbrannt. Zu dieser Klasse von Ruß-Herstellverfahren gehören zum Beispiel das Furnaceruß-Verfahren, das Gasruß-Verfahren und das Flammruß-Verfahren. Als kohlenstoffhaltige Rußrohstoffe werden überwiegend mehrkernige aromatische Rußöle eingesetzt.

Beim Furnaceruß-Verfahren erfolgt die unvollständige Verbrennung in einem mit hochfeuerfesten Material ausgekleideten Reaktor. Hierzu wird in einer Vorbrennkammer durch Verbrennen eines Brennstoff/Luft-Gemisches ein Strom heißer Abgase erzeugt, in die der Rußrohstoff eingesprüht oder eingespritzt wird. Der sich bildende Ruß wird durch Einsprühen von Wasser in den Reaktor abgeschreckt und vom Gasstrom abgetrennt. Das Furnaceruß-Verfahren erlaubt die Herstellung von Rußen mit einer sehr großen Bandbreite der rußtechnischen Eigenschaften.

Flammruß- und Gasruß-Verfahren stellen wichtige Alternativen zum Furnaceruß-Verfahren dar. Sie liefern Ruße, deren Eigenschaften sich zum Teil mit den durch das Furnaceruß-Verfahren zugänglichen rußtechnischen Eigenschaften überlappen, jedoch auch die Herstellung von Rußen ermöglichen, die durch das Furnaceruß-Verfahren nicht herstellbar sind.

Die Flammruß-Apparatur besteht aus einer gußeisernen Schale, die den flüssigen oder gegebenenfalls geschmolzenen Rohstoff aufnimmt, und einer feuerfest ausgemauerten Abzugshaube. Der Luftspalt zwischen Schale und Abzugshaube sowie der Unterdruck im System dienen zum Regulieren der Luftzufuhr und damit zur Beeinflussung der Rußeigenschaften. Infolge der Hitzestrahlung der Abzugshaube verdampft der Rohstoff und wird teilweise verbrannt, hauptsächlich jedoch in Ruß überführt. Zur Abtrennung des Rußes werden die rußhaltigen Prozeßgase nach dem Abkühlen in ein Filter geleitet.

Beim Gasruß-Verfahren wird der Rußrohstoff zunächst in einen wasserstoffhaltigen Trägergasstrom hinein verdampft und dann in einer Vielzahl von kleinen Flämmchen unterhalb einer gekühlten Walze verbrannt. Ein Teil des entstehenden Rußes scheidet sich auf der Walze ab, ein anderer wird mit den Prozeßgasen ausgetragen und in einem Filter abgeschieden.

Die für die Beurteilung von Pigmentrußen wichtigen Eigenschaften sind die Farbtiefe M_{Y} (nach DIN 55979), die Farbstärke (Präparierung einer Rußpaste nach DIN EN ISO 787/16 und Auswertung nach DIN EN ISO 787/24), der Ölbedarf (nach DIN EN ISO 787/5), die flüchtigen Bestandteile (nach DIN 53552), die Struktur, gemessen als DBP-Adsorption (nach DIN 53601 oder ASTM D2414), die mittlere Primärteilchengröße (durch Auswertung von elektronenmikroskopischen Aufnahmen) und der pH-Wert (nach DIN EN ISO 787/9 oder ASTM D1512).

Tabelle 1 zeigt die durch die erwähnten Herstellverfahren zugänglichen Eigenschaftsbereiche von Pigmentrußen. Die Angaben von Tabelle 1 wurden aus technischen Veröffentlichungen verschiedener Rußhersteller zu den Rußkennzahlen von nicht oxidativ nachbehandelten Rußen zusammengetragen.

**Tabelle 1**

| Eigenschaft | Furnaceruß | Gasruß | Flammruß |
|---|---|---|---|
| Farbtiefe M_{Y} | 210 - 270 | 230 - 300 | 200 - 220 |
| Farbstärke IRB3=100 | 60 - 130 | 90 - 130 | 25 - 35 |
| Ölbedarf [g/100g] | 200 - 500 | 400 -1100 | 250 - 400 |
| DBP-Adsorption [ml/100g] | 40 - 200 | | 100 - 120 |
| Teilchengröße [nm] | 10 - 80 | 10 - 30 | 110 - 120 |
| flüchtige Bestand. [Gew.-%] | 0,5 - 1,5 | 4 - 6 | 1 - 2,5 |
| pH-Wert | 8 - 10 | 4 - 6 | 6 - 9 |

Wichtige anwendungstechnische Eigenschaften eines Lackes oder einer Druckfarbe sind die Stabilität der Rußdispersion im Bindemittelsystem (Lagerstabilität) und das rheologische Verhalten des Lackes oder der Druckfarbe (Viskosität und Thixotropie). Sie werden entscheidend durch die chemische Beschaffenheit der Oberfläche der Ruße beeinflußt.

Die Oberflächenchemie der Ruße hängt sehr von dem gewählten Herstellverfahren ab. Beim Furnaceruß-Verfahren erfolgt die Rußbildung in einer stark reduzierenden Atmosphäre, während beim Gasruß-Verfahren der atmosphärische Sauerstoff freien Zugang zur Rußbildungszone hat. Entsprechend weisen die Gasruße schon direkt nach der Herstellung einen wesentlich größeren Gehalt an Oberflächenoxiden auf als Furnaceruße.

Bei den Oberflächenoxiden handelt es sich im wesentlichen um Carboxylgruppen, Lactole, Phenole und Chinone, die zu einer sauren Reaktion von wäßrigen Rußdispersionen führen. Im geringeren Maße weisen die Ruße auch basische Oxide an der Oberfläche auf. Die Oberflächenoxide bilden die sogenannten flüchtigen Bestandteile der Ruße, da sie durch Glühen der Ruße bei 950°C von der Rußoberfläche desorbiert werden können (DIN 53552).

Der Gehalt der flüchtigen Bestandteile hat einen entscheidenden Einfluß auf die Dispergierbarkeit der Ruße insbesondere in wäßrigen Systemen. Je höher der Gehalt der Ruße an flüchtigen Bestandteilen ist, um so geringer ist der hydrophobe Charakter der Ruße und um so leichter sind sie in wasserbasierten Bindemittelsystemen dispergierbar.

Aus den genannten Gründen werden Pigmentruße im allgemeinen oxidativ nachbehandelt, um ihren Gehalt an flüchtigen Bestandteilen zu erhöhen. Als Oxidationsmittel kommen Salpetersäure, Stickstoffdioxid und im geringeren Umfang auch Ozon zum Einsatz. Die in Tabelle 1 angegebenen Gehalte an flüchtigen Bestandteilen und pH-Werte können durch oxidative Nachbehandlung erhöht werden. Das Oxidationsverhalten hängt dabei entscheidend vom Ruß-Herstellverfahren ab. Bei Furnacerußen läßt sich der Gehalt an flüchtigen Bestandteilen nur etwa auf 6 Gew.-% erhöhen. So berichtet die US 3,565,657 über die Oxidation von Furnacerußen mit Salpetersäure. Der in diesem Patent genannte höchste Gehalt an flüchtigen Bestandteilen beträgt 7,6 Gew.-%.

In mehreren Patenten wurde versucht, die auf ihrem hohen flüchtigen Gehalt beruhenden vorteilhaften Eigenschaften von Gasrußen durch Ozonbehandlung von Furnacerußen nachzubilden. Hierzu gehören die Patente US 3,245,820, US 3,364,048 und US 3,495,999. Gemäß der US 3,245,820 konnte durch die Ozonbehandlung der flüchtigen Gehalt der Furnaceruße auf 4,5 Gew.-% erhöht werden.

Eine weitere wichtige Eigenschaft der Ruße ist ihre spezifische Oberfläche, die durch verschiedene Adsorptionsmethoden ermittelt wird. Bei der Bestimmung der Stickstoffoberfläche (BET-Oberfläche nach DIN 66132) geht man von einer Belegung der Rußoberfläche mit Stickstoffmolekülen aus, wobei der bekannte Platzbedarf des Stickstoffmoleküls eine Umrechnung in m²/g ermöglicht. Da das kleine Stickstoffmolekül auch in Poren und Spalten des Rußes eindringen kann, erfaßt diese Methode auch die innere Oberfläche der Ruße.

Einen größeren Platzbedarf als Stickstoff hat das Cetyltrimethyl-ammonium-bromid (CTAB). Die CTAB-Oberfläche (Messung nach ASTM D-3765) kommt daher der Ermittlung der geometrischen Oberfläche ohne Poren, am nächsten. Deshalb korreliert die CTAB-Oberfläche sehr gut mit der Teilchengröße und läßt damit Rückschlüsse auf das anwendungstechnische Verhalten der Ruße zu.

Die Jodadsorption, auch als Jodzahl bezeichnet, ist eine dritte Methode zur Charakterisierung der Oberfläche von Rußen. Die Jodzahl wird nach ASTM D-1510 gemessen. Sie wird stark von Oberflächengruppen und adsorbierten PAH's beeinflußt. Daher wird die gemessene Adsorption in mg/g nicht in m²/g umgerechnet. Üblicherweise wird die Jodadsorption nur bei Rußen mit flüchtigen Bestandteilen unter 1,5 Gew.-% und einem Toluolextrakt unter 0,25 Gew.-% angegeben. Wegen ihrer Empfindlichkeit gegenüber den flüchtigen Oberflächengruppen kann die Jodadsorption aber gerade als weitere Charakterisierungsmöglichkeit für oxidierte Ruße mit hohen flüchtigen Bestandteilen eingesetzt werden.

Aufgabe der vorliegenden Erfindung ist es, Ruße für Lacke und Druckfarben anzugeben, welche sich durch ein verbessertes Dispergierverhalten in wasserbasierten Bindemittelsystemen und durch eine verbesserte Lanzzeitstabilität der mit diesen Rußen hergestellten Lacke und Druckfarben auszeichnen.

Diese Aufgabe wird gelöst durch einen oxidativ mit Ozon nachbehan-delten Gasruß, der dadurch gekennzeichnet ist, daß sein Gehalt an flüchtigen Bestandteilen mehr als 15 Gew.-%, bezogen auf sein Gesamtgewicht, beträgt und das Verhältnis seiner CTAB-Oberfläche zur Jodzahl größer als 2 m²/mg ist. Bevorzugt beträgt das Verhältnis der CTAB-Oberfläche zur Jodzahl mehr als 4 m²/g. Darüber hinaus weisen diese Ruße keine meßbare Konzentration an basischen Oberflächenoxiden auf.

CTAB-Oberfläche und Jodzahl werden hierbei nach den oben angeführten ASTM-Normen gemessen. Wichtig ist dabei, daß die Ruße vor der Messung keiner thermischen Behandlung zur Desorption der flüchtigen Bestandteile unterzogen werden.

Es wurde gefunden, daß die geforderte Eigenschaftskombination aus flüchtigen Bestandteilen und einem bestimmten Mindestverhältnis der CTAB-Oberfläche zur Jodzahl bei Rußen dazu führt, daß sie sich sehr leicht in Wasser dispergieren lassen und daß diese Dispersion auch über Tage hinweg stabil bleibt, ohne daß ein Netzmittel oder Dispergieradditiv hinzugefügt werden muß. Diese hohe Lagerstabilität der wäßrigen Rußdispersion macht die erfindungsgemäßen Ruße besonders geeignet für die Verwendung in Lacken, Druckfarben und als Tinten für maschinelle und manuelle Schreib- und Zeichengeräte, also zum Beispiel als Tinten für Tintenstrahldrucker, Filzstifte und Kugelschreiber.

Die erfindungsgemäßen Ruße sind erhältlich durch Ozonoxidation von Gasrußen. Furnaceruße sind als Ausgangsruße ungeeignet, da bei ihnen der Gehalt an flüchtigen Bestandteilen auch durch Ozonoxidation nicht über etwa 7 bis 8 Gew.-% erhöht werden kann. Durch entsprechende Messungen an kommerziellen Pigmentrußen verschiedener Hersteller kann leicht gezeigt werden, daß die beanspruchte Eigenschaftskombination bisher nicht bekannt war. Solche Messungen gibt die Tabelle 2 wieder.

**Tabelle 2**

| Eigenschaften kommerzieller Pigmentruße | | | | |
|---|---|---|---|---|
| Ruß | flüchtige Bestandteile [Gew.-%] | CATB-Oberfläche [m²/g] | Jodadsorption [mg/g] | CTAB/Jod [m²/mg] |
| Cabot | | | | |
| Monarch 1300 | 11,7 | 363 | 479 | 0,76 |
| Monarch 1000 | 12,4 | 255 | 314 | 0,81 |
| Mogul L | 4,8 | 132 | 110 | 1,20 |

| Columbian | | | | |
|---|---|---|---|---|
| Raven 5000 UII | 15,2 | 346 | 302 | 1,15 |
| Raven 1255 | 6,2 | 119 | 73 | 1,63 |

| Degussa | | | | |
|---|---|---|---|---|
| FW 200 | 24,0 | 485 | 255 | 1,90 |
| FW 1 | 4,3 | 236 | 239 | 0,99 |
| Printex U | 5 | 99 | 63 | 1,57 |
| Printex 90 | 1 | 250 | 350 | 0,71 |
| SS 550 | 2,5 | 120 | 101 | 1,19 |

Bemerkenswert an dieser Liste ist der kommerzielle Gasruß FW 200. Es handelt sich um einen nicht mit Ozon oxidierten Gasruß. Trotz seines hohen Gehaltes an flüchtigen Bestandteilen zeigt er nicht das geforderte Verhältnis von CTAB/Jod.

Die Erfindung wird an Hand der folgenden Beispiele noch eingehender erläutert. Es zeigen:

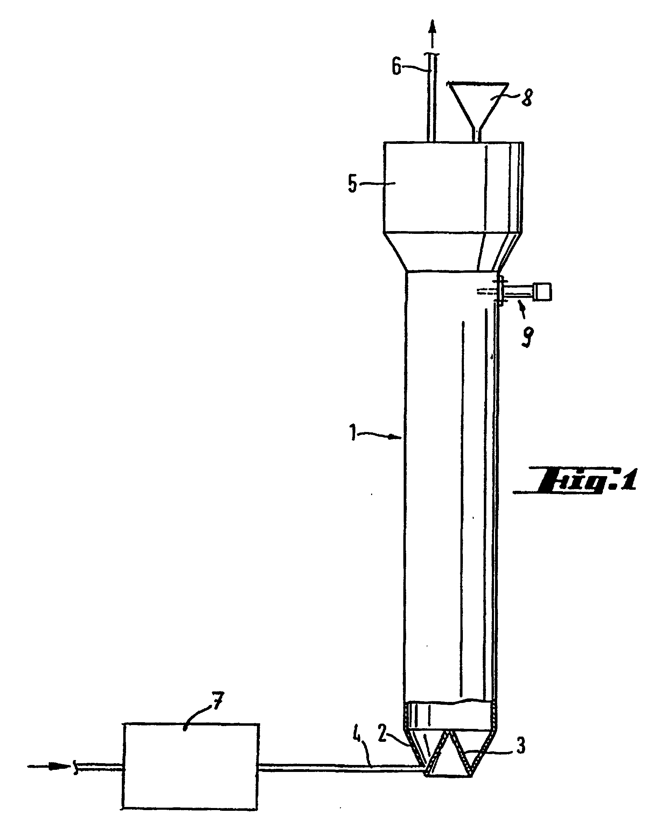

### Figur 1: Apparatur zur Oxidation von Rußen mit Ozon

Figur 1 zeigt eine geeignete Fließbett-Apparatur zur chargenweisen Oxidation von Ruß mit Ozon. Sie besteht aus einem senkrecht stehenden zylinderförmigen Behandlungsgefäß (1). Dieses weist an seinem unteren Ende einen Fluidisierungsteil auf, der aus einem vom Zylinderquerschnitt aus nach unten verlaufenden kegelstumpfförmigen Mantel (2), einem in den Kegelstumpf eingesetzten, nach oben zulaufenden kegelförmigen Verdängungskörper (3) und mindestens einem an der tiefsten Stelle des Fluidisierungsteils im wesentlichen tangential mündenden Einleitungsrohr (4) für das Behandlungsgas besteht. Über dem Behandlungsgefäß (1) ist ein Beruhigungsteil (5) mit einem Auslaßrohr (6) für das Abgas angeordnet. Über den Rußeinfüllstutzen (8) kann Ruß in das Behandlungsgefäß aufgegeben werden. (9) bezeichnet einen Sensor zur Regelung der Fließbetthöhe. Zur Ozonerzeugung wird das Behandlungsgas (Luft oder Sauerstoff) vor Eintritt in das Behandlungsgefäß durch den Ozongenerator (7) geleitet. Das Behandlungsgefäß hat einen Innendurchmesser von 8 cm und eine Höhe von 1,5 m.

Mit der in Figur 1 gezeigten Apparatur wird der Ruß chargenweise oxidiert. Durch eine entsprechende Gestaltung des Fließbettes kann jedoch auch eine kontinuierliche Verfahrensführung verwirklicht werden.

Für die Oxidationsversuche wurde ein Ozonisator mit folgenden Leistungsdaten verwendet:

| | |
|---|---|
| Betriebsdruck | max. 0,6 bar |
| Traggasmenge | max. 600 l/h |
| Kühlwasser | 40 l/h (15°C) |
| Betriebstemperatur | max. 35°C |
| Generatorspannung | 16 kV |

Die zu erreichende Ozonkonzentration ist von der Generatorspannung, von der Traggasmenge und ihrem Sauerstoffgehalt abhängig. Bei einer Generatorspannung von 16 kV werden bei Einsatz von Luft max. 12 g Ozon/h und beim Einsatz von Sauerstoff max. 25 g Ozon/h erreicht.

### Beispiel 1:

Der Gasruß FW 1 wurde in der Apparatur von Figur 1 unterschiedlich lange mit Ozon oxidiert und anschließend bezüglich seiner rußtechnischen Eigenschaften analysiert.

Bei allen Oxidationsversuchen wurde der Ozonisator mit konstanter Luftmenge von 310 Nl/h betrieben. Das Fließbett wurde jeweils mit 200 g Ruß beladen. Die Reaktionstemperatur lag bei allen Versuchen im Bereich zwischen 20 und 30°C. Tabelle 3 zeigt die erzielten Ergebnisse nach unterschiedlich langer Behandlung von FW 1 im Vergleich zu unbehandeltem FW 1 und zum kommerziellen oxidierten Gasruß FW 200.

Gemäß Tabelle 3 werden folgende Abhängigkeiten von der Dauer der Ozonoxidation beobachtet:
- Antstieg des flüchtigen Gehaltes
- Abnahme des pH-Wertes
- Anstieg der CTAB-Oberfläche
- Abnahme der Jodzahl
- Abnahme der DIN-Farbstärke
- Abnahme des Ölbedarfs
- deutliche Veränderung der Oberflächenoxidzusammensetzung

Die Änderungen von CTAB-Oberfläche und Jodzahl bedeuten nicht, daß durch die Ozonoxidation die Teilchengröße und damit die Oberfläche geändert wird, zumal die Effekte gegenläufig sind. Vielmehr wird durch die Modifikation der Rußoberfläche die Adsorption von Jod und CTAB so stark beeinflußt, daß die erhaltenen Zahlen kein Maß mehr für die Oberfläche darstellen. Sie sind jedoch geeignet, um neben dem Gehalt an flüchtigen Bestandteilen zusätzliche Aussagen über die Art der Oberflächenmodifikation durch die Oxidationsbehandlung zu erhalten.

Bei den hochoxidierten Rußen steigt der My-Wert auf 328 an. Mit steigendem Oxidationsgrad ändert sich auch die Zusammensetzung der Oberflächenoxide. Die Carboxylgruppen und Chinone nehmen stark zu, während die phenolischen Gruppen und die basischen Oxide abnehmen. Der Gehalt an Lactolen bleibt nahezu unverändert.

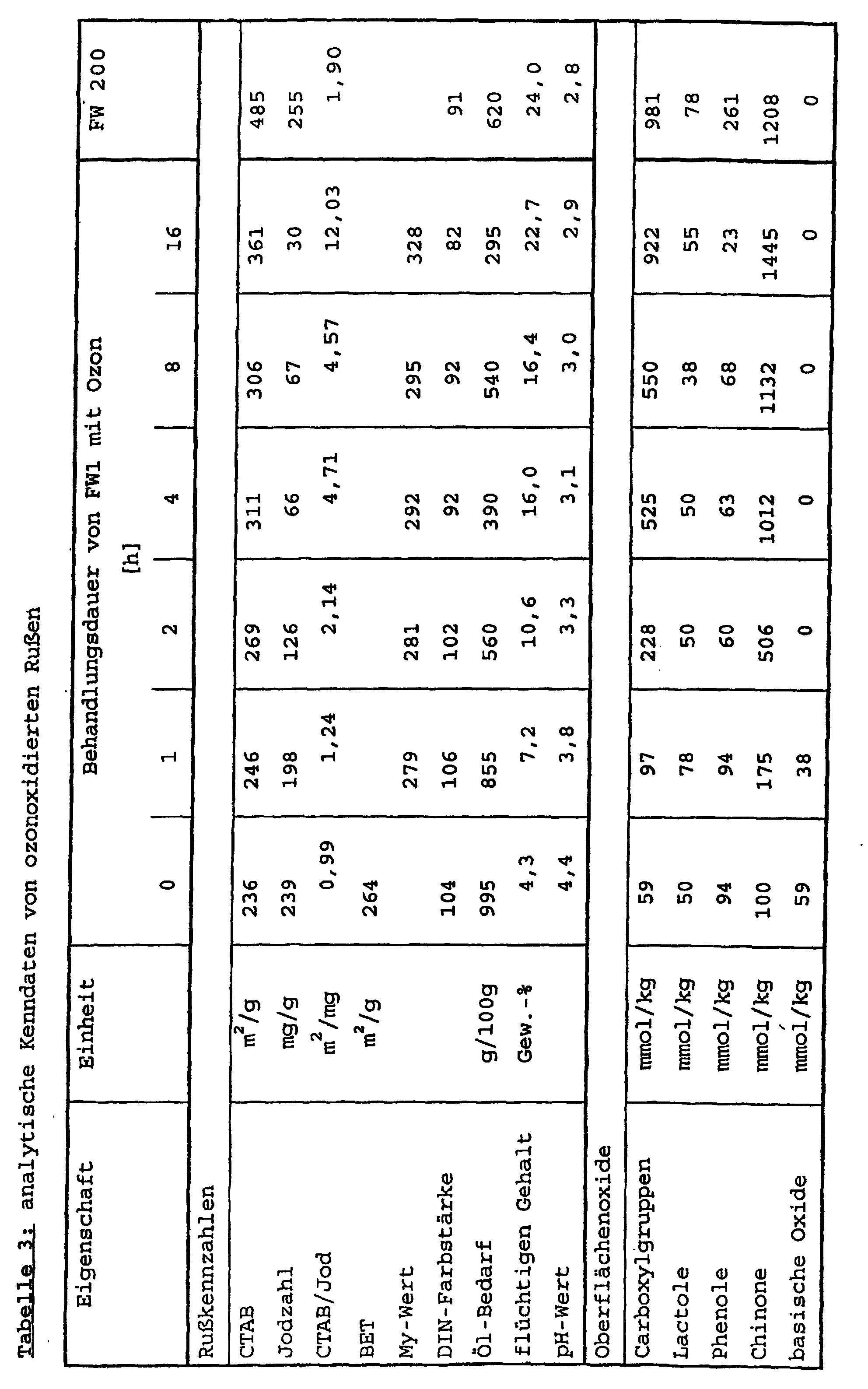

Der nicht mit Ozon oxidierte Gasruß FW 200 zeigt ein ganz anderes Verhältnis von CTAB-Oberfläche zu Jodzahl, was auf die unterschiedliche Zusammensetzung der Oberflächenoxide zurückgeführt werden kann.

### Anwendungsbeispiel:

Ein besonderer Vorteil der erfindungsgemäßen Ruße ist ihre leichte Dispergierbarkeit in Wasser und die hohe Stabilität dieser Dispersion. Zur Überprüfung dieses Verhaltens wurden mit dem erfindungsgemäßen Ruß und kommerziellen Vergleichsrußen sogenannte Absetzprüfungen vorgenommen. Hierzu wurde jeweils 1 Gramm Ruß in 99 ml Wasser ohne Netzmittel mit Ultraschall für die Dauer von 5 Minuten dispergiert und anschließend das Absetzen des dispergierten Rußes beobachtet. Die für diese Untersuchungen verwendeten Bechergläser hatten ein Volumen von 150 ml und einen Durchmesser von 5 cm. Bereits nach 15 Minuten trat bei den nicht mit Ozon oxidierten Rußen ein Absetzen des Rußes ein. Es bildete sich am oberen Rand des Flüssigkeitsspiegels eine klare, rußfreie Schicht. Im einzelnen ergab sich das in Tabelle 4 angegebene Absetzverhalten.

**Tabelle 4**

| Absetzverhalten verschiedener Ruße | | | | |
|---|---|---|---|---|
| Ruß | | Oxidation mit | flüchtigen Gehalt [Gew.-%] | Absetzen nach 15 Minuten [cm] |
| SS 550 | F¹⁾ | NO₂ | 2,5 | 1 |
| FW 200 | G²⁾ | NO₂ | 24,0 | 0,5 |
| Printex 90 | F | --- | 1 | 1 |
| Printex U | G | --- | 5 | 0,25 |
| FW1 | G | --- | 4,3 | 0,5 |
| FW1 | G | Ozon | 15 | 0 |

| | | | | |
|---|---|---|---|---|
| 1) F: Furnaceruß; | | | | |
| 2) G: Gasruß | | | | |

Bei dem erfindungsgemäßen mit Ozon oxidierten Gasruß FW1 ist auch nach einer Woche kein Absetzen des Rußes zu erkennen.

## Patentansprüche

1. Oxidativ mit Ozon nachbehandelter Gasruß,
**dadurch gekennzeichnet,**
**daß** sein Gehalt an flüchtigen Bestandteilen mehr als 15 Gew.-%,bezogen auf sein Gesamtgewicht, beträgt und das Verhältnis seiner CTAB-Oberfläche zur Jodzahl größer als 2 m²/mg ist.

2. Ruß nach Anspruch 1,
**dadurch gekennzeichnet,**
**daß** das Verhältnis seiner CTAB-Oberfläche zur Jodzahl größer als 4 m²/mg ist.

3. Verwendung des Rußen nach einem der vorstehenden Ansprüche in Lacken, Druckfarben und als Tinten für maschinelle und manuelle Schreib- und Zeichengeräte.

## Claims

1. Channel black, oxidatively aftertreated with ozone,
**characterised in that**
the concentration of volatile constituents is more than 15 wt.%, with respect to the total weight, and the ratio of its CTAB surface area to the iodine number is greater than 2 m²/mg.

2. A carbon black according to Claim 1,
**characterised in that**
the ratio of its CTAB surface area to the iodine number is greater than 4 m²/mg.

3. Use of carbon blacks according to one of the preceding Claims in lacquers, printing inks and inks for mechanical and manual writing and drawing instruments.

## Revendications

1. Noir de fumée post-traité par oxydation par l'ozone,
**caractérisé en ce que**
sa teneur en composants volatils est supérieure à 15 % en poids, par rapport à son poids total, et le rapport de sa surface CTAB à l'indice d'iode est supérieur à 2 m²/mg.

2. Noir de fumée selon la revendication 1,
**caractérisé en ce que**
le rapport de sa surface CTAB à l'indice d'iode est supérieur à 4 m²/mg.

3. Utilisation du noir de fumée selon l'une quelconque des revendications précédentes, dans des peintures, des encres d'imprimerie et comme encres pour des appareils manuels et mécaniques d'écriture et de dessin.
